# EUROPEAN PATENT APPLICATION

(11) **EP 0 642 731 A1**
(43) Date of publication of application: **15.03.1995**
(21) Application number: 94202336.7
(22) Date of filing: 17.08.1994
(51) Int. Cl.: A01D 34/66, A01B 59/048

(54) **A mowing machine**

(30) Priority: 20.08.1993 NL 9301441
(71) Applicant: MAASLAND N.V., NL-3155 PD Maasland (NL)
(72) Inventor: Beije, Marinus, NL-2991 BV Barendrecht (NL); Koorn, Maarten, NL-3123 CP Schiedam (NL)
(74) Representative: Mulder, Herman

(57) **Abstract**

The invention relates to a mowing machine intended for being coupled to a coupling device attached to the front side of a vehicle, the machine comprising first (13) and second (15) frame portions. The first frame portion (13) includes a coupling trestle (17) and a carrier structure (20, 22) connected thereto, and the second frame portion (15) includes a frame beam (1) which extends at least substantially at a square angle to the direction of travel (A) and predominantly in a horizontal direction. To this frame beam (1) there is coupled at least one carrier (3) which is disposed at a lower level for mowing elements (4) which are rotatable via upwardly directed and motorically drivable shafts. The first (13) and second (15) frame portions are interconnected via a four-bar linkage (14) which is pivotal about shafts (26 - 29) which are arranged at least predominantly horizontally and transversely of the direction of travel (A).

## Description

The present invention relates to a mowing machine intended for being coupled to a coupling device attached to the front side of a vehicle and having for its object to carry the machine, the machine comprising a first and a second frame portion, the first frame portion comprising a coupling trestle and a carrier structure connected thereto, and the second frame portion comprising a frame beam which extends at least substantially at a square angle to the direction of travel and in a predominantly horizontal direction, to which at least one carrier disposed at a lower level is coupled for accommodating mowing members which are rotatable via upwardly directed and motorically drivable shafts.

Machines of this type are known. According to the invention, an advantageous embodiment of such machines is obtained, when the first and second frame portions are interconnected via a four-bar linkage which is pivotal about shafts which are arranged at least predominantly horizontally and transversely to the direction of travel.

In addition, the invention has for its object to provide a further improvement of such machines. According to the invention, this can be achieved when the carrier and the major portion of the drive means intended for driving the mowing elements, are, taken in a side view, located at least predominantly between the leading and the trailing pivotal shafts of the lower connecting arms of the four-bar linkage.

In accordance with another, also further improvement according to the invention, which can be implemented both separately and in combination with the said above mesure in the described prior art machine, it is advantageous that at least two arms of a set of four-bar linkage arms are interconnected by means of a torsion rod which comprises the pivotal shafts for the connection between the relevant four-bar linkage arms and the first frame portion, or is at least arranged thereabout in a concentric manner. This has the advantage that these two lateral motions of the second frame portion is limited relative to the first frame portion and that when the second frame portion deflects upwardly in front of an obstacle encountered at one end of the machine, also the other end of the machine is lifted upwardly in conjunction therewith. This last feature is of particular advantage when the drive of the machine is effected mainly via one end of the machine.

In accordance with the invention, an advantageous embodiment of the machine further includes a carrier structure which mainly extends forwardly and reaches to beyond the second frame portion. In accordance with a still further feature the machine includes, disposed at one end of the second frame portion, a gear box which, via transmission means, is in driving connection with drive means for the mowing elements, accommodated in the carrier.

In accordance with a still further feature the machine includes, taken in the longitudinal direction of the second frame portion, a centrally arranged transmission box for drive purposes from a tractor or an other type of vehicle, which central transmission box is in driving connection with the lateral transmission box via a coupling shaft which extends transversely to the direction of travel. In an advantageous embodiment in accordance with the invention, the mowing members are drivable about drive shafts which extends upwardly from the cutter bar and, as is also the driving connection between the drive means accommodated in the carrier and the transmission box located near one end of the frame beam, and preferably also the central transmission box, are disposed at the leading side of the frame beam relative to the direction of travel. This has the advantage that a coupling shaft, if present, which reaches to beyond a crusher implement is given an adequate deflection capability in the upward and downward directions. In a special embodiment the machine therefore also includes a crusher implement which extends at least predominantly behind the carrier and in parallel therewith, and is bearing-supported by supports for the connection between the frame beam and the carrier.

In accordance with a special feature of the invention, the lower pivotal shafts of the four-bar linkage are at a lower level than the coupling shaft which extends transversely of the direction of travel and the lower connecting arms of the four-bar linkage curve around the upper side of the coupling shaft.

In accordance with a still further special feature of the invention, the frame beam is further supported with respect to the first frame portion by means of a flexible supporting element which is disposed parallel to a vertical plane in the direction of operative travel, outside the midway point of the frame beam and that side along which the drive for the mowing elements extends. Such a positioning of the flexible supporting element eliminates at least to a reasonable extent the unbalance in the weight distribution in the longitudinal direction of the second frame portion, which unbalance is due to the fact that the machine is driven via one end. In an advantageous embodiment an operating element, more specifically a hydraulic readjusting cylinder, is disposed parallel to and under the elastic supporting element between the first and second frame portions.

In a still further advantageous embodiment in accordance with the invention the operating element is connected to the second frame portion via an intermediate member whose motion is limited by stops and which is pivotal near each of its ends about a pivotal shaft disposed horizontally and transversely of the direction of travel. Such an intermediate member has the advantage that the second frame portion when it deflects upwardly before an obstacle in the field, can be moved without frictional resistance and consequently very rapidly in the upward or downward directions, which, although it has indeed been released, holds to a lesser extent for a hydraulic readjusting cylinder.

In an advantageous embodiment in accordance with the invention, the four-bar linkage comprises two lower connecting arms and an upward connecting arm centrally disposed therebetween and, taken in a side view, is preferably designed as a parallelogram. It is at the same time advantageous, in particular in an embodiment provided with a torsion rod described in the foregoing, for the rear pivotal points for the lower connecting arms to comprise a ball joint. In accordance with a further feature of the invention, it is also advantageous that both the leading and the trailing pivotal point of an upper connecting arm includes a ball joint.

A still further feature of the invention concerns a construction, in which the freedom of moving in the lateral direction of the second frame portion relative to the first frame portion is limited by means of a torsion rod which is rigidly connected to the leading end of the lower connecting arms and which at the same time constitutes the leading lower pivotal shaft of the four-bar linkage. A likewise further feature concerns the construction in which, taken in a side view, the supporting element disposed between the first and second frame portions acts on the second frame portion between the rotary shaft of the crusher implement and the carrier. This has the advantage that the supporting element acts in or at least in the immediate vicinity of the centre of gravity, on the second frame portion.

In accordance with a still further special feature of the invention the mowing element drive includes a predominantly vertically extending drive shaft, which is shielded with the aid of a protection member consisting of two drum-shaped elements which are capable of moving independently of each other and of which one can be moved into or over the other. In this situation the upper protection element is of a lesser bulk than the bulk of the lower protection element and is connected to a flange member connected to the transmission box, whilst the lower protection element is connected to a mowing element disposed around the upwardly directed driving elements. In accordance with also a feature of the invention, the transmission between the transmission box attached in the upper part of the second frame portion and the transmission means associated with the cutter bar includes a telescopic coupling shaft which for the benefit of its connection to the said transmission means is connected thereto at both ends via a universal joint.

For a better understanding of the invention and to show how the same may be carried into effect, reference will now be made, by way of example, to the accompanying drawings.
Figure 1 is a plan view of a machine in accordance with the invention;
Figure 2 is a side view taken in the direction of the arrow II in Figure 1;

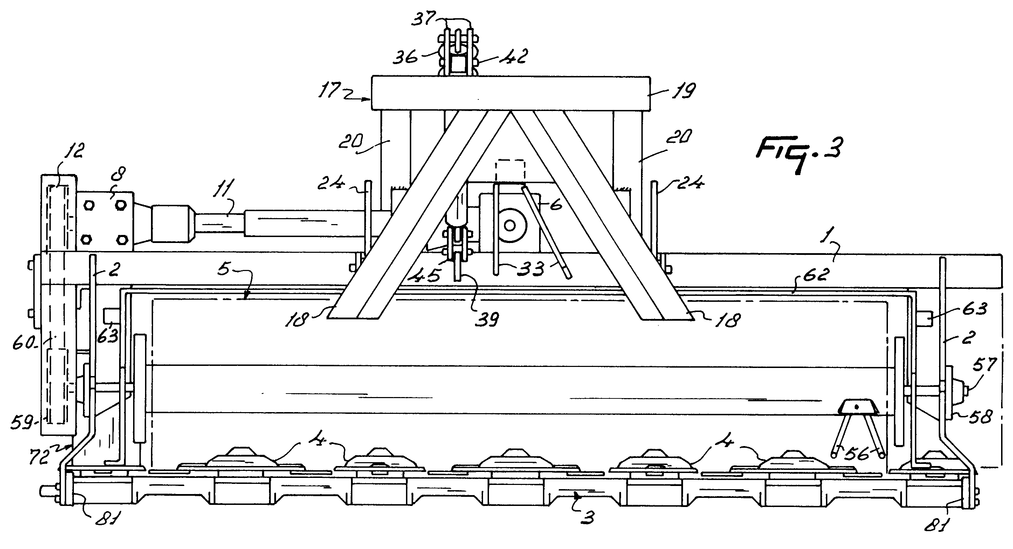

Figure 3 is a view taken in the direction of the arrow III in Figure 2;
Figure 4 is a view taken on the line IV-IV in Figure 1;
Figure 5 is a view taken on the line V-V in Figure 1;
Figure 6 is a view taken on the line VI-VI in Figure 1;
Figure 7 is a plan view of part of a third embodiment, and
Figure 8 is a side view as Figure 2 of the embodiment shown in Figure 7.

Corresponding components in the Figures have been given the same reference numerals. In addition, the invention is in no way limited to the embodiments shown and described here; they only serve by way of illustration of the inventive idea.

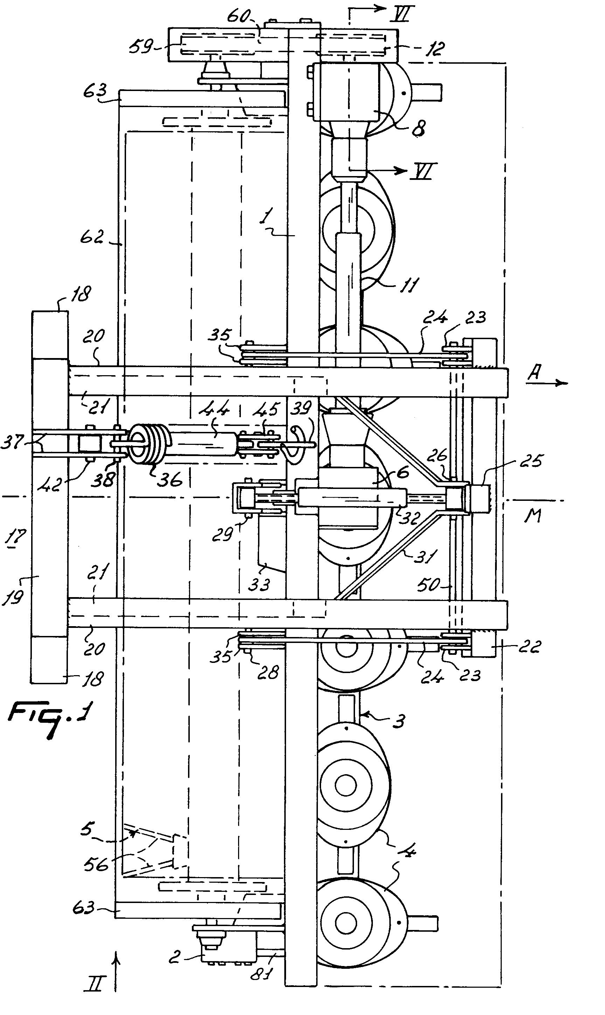

Figure 1 shows a mowing machine which is suitable for coupling to the lifting hitch at the front side of a tractor. The mowing machine which is predominantly known per se includes a frame beam 1 which is disposed in the upper part of the machine and is provided near its end with downwardly extending arms 2, via which a cutter bar 3, or carrier 3, for the mowing elements 4, and also a crusher implement 5 which is known per se, are supported. The frame beam 1 serves at the same time as a support for a transmission box 6 which by means of a bracket 7 is disposed at the leading side, but, taken in a longitudinal direction, in the midway point on the beam 1. Via this box 6 a drive to be taken from the leading power take-off shaft of the tractor is transferred to one side of the machine through an angle of 90°. To that end there is attached to one end of the beam 1 via a bracket 7 a second transmission box 8 which, with respect to the direction of travel A, is also located just at the leading side of the frame beam 1, between which outermost and central transmission boxes 6 and 8 a coupling shaft 11 extends predominantly horizontally transversely to the direction of travel A. The second transmission box 8 has an outgoing shaft which, compared to the coupling shaft 11, is a continuous shaft and a downwardly extending shaft, the latter being in driving connection with drive means in the cutter bar 3 for the mowing element 4. The continuous outgoing shaft accommodates a drive wheel 12 for a Vee rope drive with the aid of which the said crusher implement 5 is driven.

The above-described mowing machine is supported with respect to the front-mounted lifting hitch of a tractor by a carrier frame which in the machine constitutes a first frame portion 13. Taken in a side view, the first frame portion 13 is connected via a four-bar linkage 14 which is of such a design that it is approximately a parallelogram, to the frame beam 1 or to a second frame portion 15 of the mowing machine. The second frame portion is then constituted by the frame beam 1 and may include the further machine parts attached thereto. The first frame portion 13 includes a trestle 17 for coupling to the tractor, which in the present embodiment is designed as a quick-action trestle which is known per se, this trestle 17 having legs 18 which are disposed centralized with respect to the central line M of the machine at an angle of approximately 45° and parallel to a vertical plane extending transversely of the direction of travel A. Attached to the upper end of the legs 18 is a cross-beam 19 which also extends transversely of the direction of travel A in a horizontal and central position with respect to the central line M. From near the ends of the cross-beam, that is to say with an interspace of approximately 80 cms, there extend, in the direction of travel A, two supports 20 constituted by tubular sections in the forward direction at an angle of approximately 20° to a horizontal. Approximately in the region of the carrier beam 1, at 3/5th of the length of a support 20, the supports 20 are each supported by a strut 21 which extends from near the bottom side of the legs 18 of the trestle 17 forwardly and slightly upwardly at an angle of approximately 10° to a horizontal. The supports 20 are interconnected near their leading ends by a connecting beam 22 which is constituted by a tubular section and extends parallel to the cross-beam 19. Attached to the connecting beam 22, near its outer ends, there are lugs 37 in which a lower connecting arm 24 of the four-bar linkage 14 is disposed about a pivotal shaft 27 which is arranged at least predominantly in the horizontal direction and transversely of the direction of travel A. In the region of the central line M a predominantly upwardly directed support 25 is attached which has for its function to support a leading upper pivotal point, formed by the pivotal shaft 26 of the four-bar linkage 14. In accordance with a preferred embodiment, the upper pivotal shafts 26, 29 are in a centralized position on the central line M, approximately 28 cms above the lower pivotal shafts 27, 28. The spacing between the leading 26, 27 and trailing 28, 29 pivotal shafts of the four-bar linkage 14 amounts preferably to approximately 60 cms. The pivotal shaft 26 is also supported by two supports 31 which, taken in the plan view of Figure 1, each extend from a point located near the connection of the struts 21 on a support 20 at an angle of approximately 45° to the central line M. An adjusting rod 32 extends in the direction of operative travel A between the upper pivotal shafts 26, 29. The upper rearmost pivotal point 29 is supported by a bracket 33 which from the frame beam 1 extends predominantly upwardly and slightly rearwardly and in which a pivotal shaft 29 is accommodated. The adjusting rod 32 forms the upper connecting arm of the four-bar linkage 14. The lower connecting arms 24 of the four-bar linkage 14 are connected to the mowing machine by means of lugs 35, provided at the rear side of the frame beam 1, and the pivotal shafts 28 provided for that purpose. The connection between a lower connecting arm 24 and the frame beam 1 includes a ball joint, as do also the leading and trailing connections of the upper connecting arm 32. The lower pair of connecting arms 24 are of a curved design, so as to accomplish that they track the curvature on the upper side of the laterally extending coupling shaft 11 of the machine. Although the lower connecting arm 24 which is located at the side facing the transmission box 8 might have been straight, because of the absence of the coupling shaft 11 at that side, it is given the same curvature to facilitate an exchange during manufacture and also to allow the rear and lower pivotal point 28 of the four-bar linkage 14 to be placed in a position against the vertical rear side of the frame beam 1, and also in the region thereof, or optionally at a lower level.

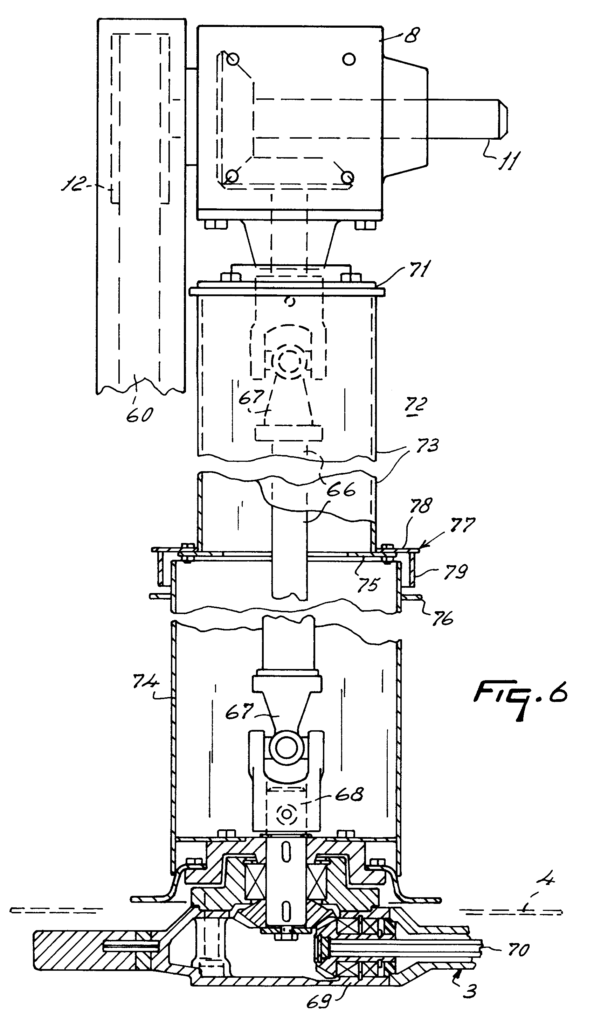

The four-bar linkage 14 is supported near its rear side by means of a flexible supporting element 36, in the present embodiment a tensile spring which is arranged between a support 37 disposed against the cross-beam 19 of the trestle 17, and is in the shape of a pair of lugs having a connecting pin 38, and a support 39 attached to the frame beam 1 of the machine, in the shape of a plate section which is welded in the vertical direction in the direction of travel A and is fitted at its upper and leading side with a hook 40 (Figure 4). Immediately below the supporting element 36 and parallel thereto an operating element 44 constituted by a hydraulic readjusting cylinder is disposed pivotally about shafts 42 and 43. In the present embodiment an oscillating element 45 is disposed between the operating element 44 and the support 9, which near its ends has one end connected to the end of the piston rod and the other end to the support 39 via pivotal shafts 43 and 46 which extend horizontally and transversely of the direction of travel. The plate-like oscillating member 45 is provided at one side with a projection 47 which is located in the plane of the supporting plate 39 and limits any motion of the oscillating member 45 by abutting against recesses 48 provided in the supporting plate. In order to eliminate the unbalance due to the unilateral positioning of the drive 8, 11, 12 to the best possible extent, the supporting element 36 is disposed slightly beyond the centre line M of the machine, towards the side including the drive 8, 11, 12, and, in the present embodiment, more in particular at approximately 1/3 of the distance between the centre line M and a lower pivotal point 27 of the four-bar linkage 14.

Figure 5 is a detailed view of the leading and lowermost structure for the pivotal joint in accordance with a preferred embodiment. In this situation the pivotal shafts 27 are part of a continuous shaft 50, which alternatively may also be denoted torsion rod. This shaft is supported near its ends in a bushing 52. The continuous shaft 50 is locked from axial shift and against rotation with the aid of a clamping pin 53. For the connection to the arms 24 a bushing 52 is equipped with a radially extending arm 54 which is secured against a side face of the lower arm 24 of the four-bar linkage 14 with the aid of one or a plurality of clamping pins 51. In accordance with a further possible construction the torsional connection between the two lower arms 24 is constituted by a tube which is concentrically arranged around the pivotal shafts 27 and rigidly connected to the arms 24. Alternative embodiments or mixed versions of the torsional connections described are also possible.

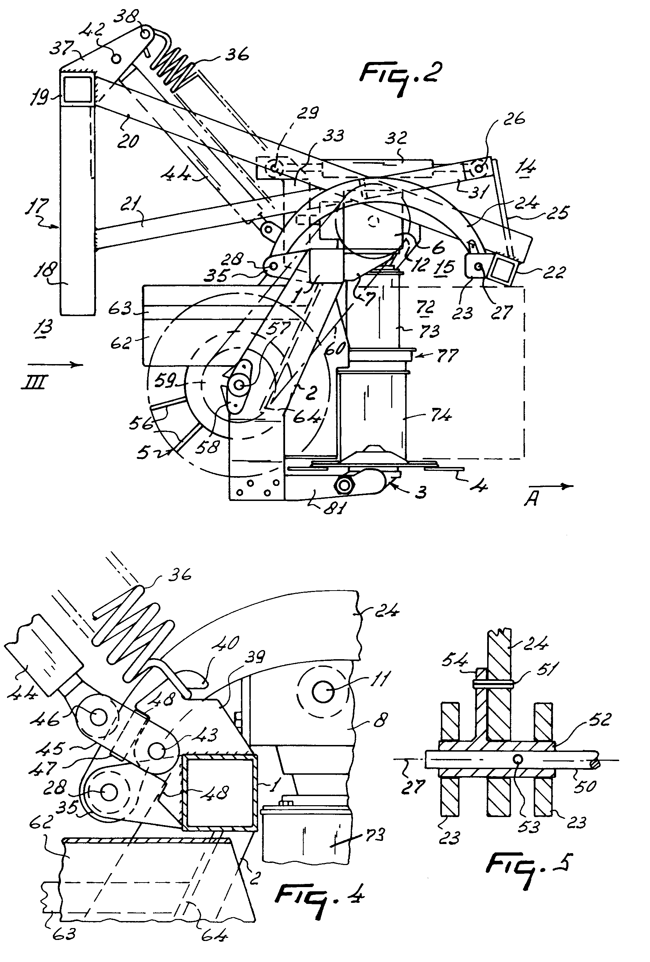

The crusher implement 5 which is shown inter alia in Figure 2, includes crusher elements 56 which are disposed around and uniformly distributed along the working width of a tube, which tube is located transversely of the direction of travel and predominantly horizontally and is capable of rotation in a bearing housing 58 mounted on the arms 2, by means of a shaft 57. At that side in which the machine faces the driving device 8, the shaft 57 extends to beyond the bearing housing 58 and a drive wheel 59 has been fitted thereupon. The drive wheel 59 is driven by the drive wheel 12 via a Vee rope 60. The crusher 5 includes a guard and crop guiding cover 62, which is inter alia secured to the tubular sections 63 which have their leading ends disposed on the upper plane of a horizontally folded portion or supporting plates 64 which are connected to the arms 2. At the rear side of the guard 62 there is a second guard section, not further shown in the Figures, which is disposed detachably and guides the crop flow downwardly towards the midway point M of the machine.

For the purpose of driving the mowing elements 4 (see Figure 6) a telescopically slidable coupling shaft 66 is arranged between the downwardly directed outgoing shaft of the transmission box 8 located near the end of the frame beam 1 and a predominantly upwardly extending outgoing shaft 68 of a transmission box 69 which is an integral part of the cutter beam 3. The latter has its ends connected via universal joints 67 to the relevant shafts outgoing from the transmission boxes 6 and 69. A covering element 72, formed by an upper drum-like hood 73 and a lower drum-like hood 74 is disposed around the coupling shaft 66 and the universal joints 67. The upper hood 73 is bolted by means of an inwardly directed flange member to a flange 71 of the transmission box 6. Via an inwardly directed flange provided near its lower side, the lower hood 74 is screwed on a carrier for a mowing member 4, disposed via key ways about the shaft 68. The lower hood 74 has a diameter which is significantly larger than that of the upper hood 73. The space between the two hoods 73 and 74 is shielded by means of a covering element 77 to counteract penetration of dirt and crop residues. This covering element 77 comprises a circular flange member 78 and an annular member 79 provided at the outer circumference thereof at the bottom side. The flange-like member 78 is screwed against the upper side of a flange 75 provided against the lower end of the drum-like guard 73. At the bottom side of the flange 75, which is slidable with a fit in the lower hood 74 there is a nut which is placed in a permanent manner against the lower side of the flange 75, in the region of the bores intended for the connecting bolts. The annular member 79 has a height of 2 to 8 cms and, at some distance around the lower hood 74, extends to a slight distance from a flange 76 which is arranged around the exterior side of the lower hood 74 and is disposed at a corresponding distance from the upper end of the hood 74 and in the radial direction extends to just beyond the annular member 79.

The construction described in the foregoing, in which in one case the drive means 6, 8, 11, 66 and 67 are located between the pivotal shafts 27, 28 of the four-bar linkage arm 24, and in which in an other case the leading ends of those lower four-bar linkage arms 24 are connected by a torsion rod 50, each relate to an individual, self-supporting structure. These structures can be used both individually and in combination.

The mode of operation of the machine will now be described in greater detail hereinafter.

In operation, the second frame 15 is supported relative to the first frame 13 at least predominantly in the leading lower pivotal points of the shafts 27 and in the support 37 on the cross-beam 19, more particularly via the arms 24 and the supporting element 36, respectively. In the operating condition the control element 44 is enabled, so that the carrier 3 alternatively denoted the cutter bar, and consequently the entire second frame portion 15, can deflect without any worthwhile resistance when it encounters an elevation or an obstacle in the field. In such a situation the second frame portion 15 is guided upwardly in the vertical direction by means of the four-bar linkage 14 which can be readjusted such as to form a parallelogram. The upward motion is facilitated by the fact that the supporting element 36 is constituted by a tensile spring which in the normal operating position is in its elongated state. In a preferred embodiment the operating element 44 is designed as a hydraulic readjusting cylinder. This implies that the operating element 44 can act also in the enabled state, because of the hydraulic character, as a slow-down of any sudden upward movements. In accordance with the invention, the operating element 44 is therefore connected to the first frame portion 13 via a freely pivotal intermediate member 45, alternatively denoted oscillating member. The Figures 2 and 4 show the machine and the above-described operating element 44 with intermediate member 45 in the transportation state. In this state the operating element 44 is fully retracted and hydraulically blocked in that position. In operation the oscillating member 45 is in a position in which it has a mechanical freedom of motion about the shafts 43 and 46, respectively, both towards the upper and the lower recesses 48. As a result thereof the second frame portion 15 is given, when moved in a vertical direction during operation through an ample height, a substantially perfectly resistanceless deflection capability.

The operating element 44, which preferably is designed as a single-acting hydraulic cylinder, is disposed parallel to the flexible supporting element 36, whereby during lifting of the machine an optimum cooperation with the supporting element is obtained. In an advantageous embodiment supporting element 36 and adjusting element 44 utilize the same supports 37 on the first frame portion 13 and 39 on the second frame portion 15, respectively. The described position of these supports 37 and 39 between the centre line M of the machine and a support 20 located at the side where the transmission element 11, 8, 12, 59 and 66 is located, cancels in accordance with the invention, for a significant part the unbalance in the weight distribution in the longitudinal direction of the second frame portion 15, which unbalance is due to the choice for driving the mowing elements 4 and a crusher element 5, if any, from one end. In a preferred embodiment this measure is combined with a torsional connection between the leading end of the lower arms 24 of the four-bar linkage 14. The other pivotal points 28, 29 and 26 preferably comprise a ball joint. All this is necessary due to the delay which may be caused in the torsional connection to, for example, the shaft 50, when an upward motion is transferred from one end of the second frame portion 15 to the other end thereof. With the aid of the same torsionally loadable connection a limitation of the freedom of motion in the lateral direction of the first frame portion 13 with respect to the second frame portion 15 is simultaneously obtained.

The location of the leading and trailing lower pivotal points 27, 28 described in the foregoing paragraphs and shown in particular in Figure 2, provides a machine which also in the presence of a crusher implement 5 is compact in the direction of travel A and of which the rear pivotal points 28 and the hook 40 of the supporting element 36, taken in the direction of travel A, are located above the centre of gravity of the machine, that is to say between the rotary shaft 57 of the crusher implement 5 and the cutter bar 3 of the first frame portion. Taken in the vertical direction, the construction also provides a comparatively compact machine by disposing the pivotal points 27, 28, 29 and 26 at the lowest possible level. The feasible height levels at which a pivotal point 28 can be accommodated, are limited in the downward direction by the presence of a crusher implement 5. When the drive elements 6, 11 and 8 are advantageously disposed at the leading side of the frame beam 1, the lower limitat for accommodating the transmission box 6 is formed by the frame beam 1, over which the coupling shaft of the tractor is to extend. In accordance with the invention a pivotal point which is disposed as low as possible can be combined with a simple-to-mount and advantageously disposed drive mechanism 6, 8 and 11 by designing the lower connecting arms 24 as curved arms, more specifically in such a manner that they reach beyond the coupling shaft 11 and frame beam 1 located transversely of the direction of travel. The above-mentioned easily mounted drive mechanism comprises commercially available transmission boxes 68 with a right-angled transmission, which boxes must be bolted to a carrier.

In operation the machine can encounter obstacles in the field, which it hits near the midway point of the cutter bar 3. Because of the large length of the cutter bar 3, which may be as much as 320 cms, and the construction of the preferred embodiment thereof, which is, for example, described in the European patent application 0 456 330, this may cause the cutter bar 3 to sag slightly, as a result of which the shortest distance between the ends of the cutter bar 3 becomes less. This decrease of the shortest length of the cutter bar 3 is compensated for in the second frame portion 15 by means of an outwardly bent portion of the lower end of an arm 2 and by supporting members 81 attached thereto and extending in the direction of operative travel and which are made of a flexible deformable type of metal. Said shortening of the cutter bar 3 also results in a displacement of a transmission box 69 belonging to the cutter bar 3 with respect to the transmission box 8 provided on the frame beam 1, which displacement is counteracted by designing the coupling shaft 66 as a telescopic shaft having a universal joint 67 at both ends. In this situation the lower portion 74 and the upper portion of the drum-shaped covering element 72 are freely movable relative to each other. The upper guard 73 is rigidly secured to the transmission box 8, whilst the lower guard 74 rotates together with the carrier for a moving element 4. Thus, the guard 74 which may be provided at the outer circumference with predominantly vertically extending carrier elements, promotes that more in particular the product mown by the relevant mowing element 4 is moved to the centre of the machine. The covering element 72 shown is of an advantageous structure in that sense that in the case of repair or removal of the coupling shaft 66 only a few bolts need to be loosened to make the coupling shaft 66 and the associated universal joints 67 accessible. To make the coupling shaft 66 accessible, at least two bolts, by means of which the upper guard 73 is bolted to the flange 71, must be loosened, whereafter at least two bolts by means of which the sealing ring 79 is secured to the guard 73, thereafter the upper guard 73 can be lowered into the lower guard 74. Using an extension piece of a spanner, two bolts, by means of which the lower guard 74 is bolted to a carrier for a mowing element 4 can thereafter be loosened. Thereafter the two guards 73, 74 can easily be slided in the longitudinal direction of the coupling shaft 66 to render thus, in this sequence, the upper and the lower, or the lower and the upper universal joints 67 accessible for removal. Otherwise, the lower universal joint 67 can already be slipped from its locking element on the shaft 68 via an aperture which is made in the lower guard 74 and is sealed with a detachable plug.

The construction described has the further advantage that, after the operating element 44 has been enabled, whereafter the flexible supporting element 36 is stretched out under the weight of the second frame portion 15, the machine can be adjusted via the lifting hitch in which the first frame portion 13 is carried, for the benefit of an operating position to such a height that the second frame portion 15 just contacts the soil, however without bearing thereon. Thereafter this lifting hitch position can be maintained during operation and only the operating element 44 needs to be operated, for example for making a turn on the head field.

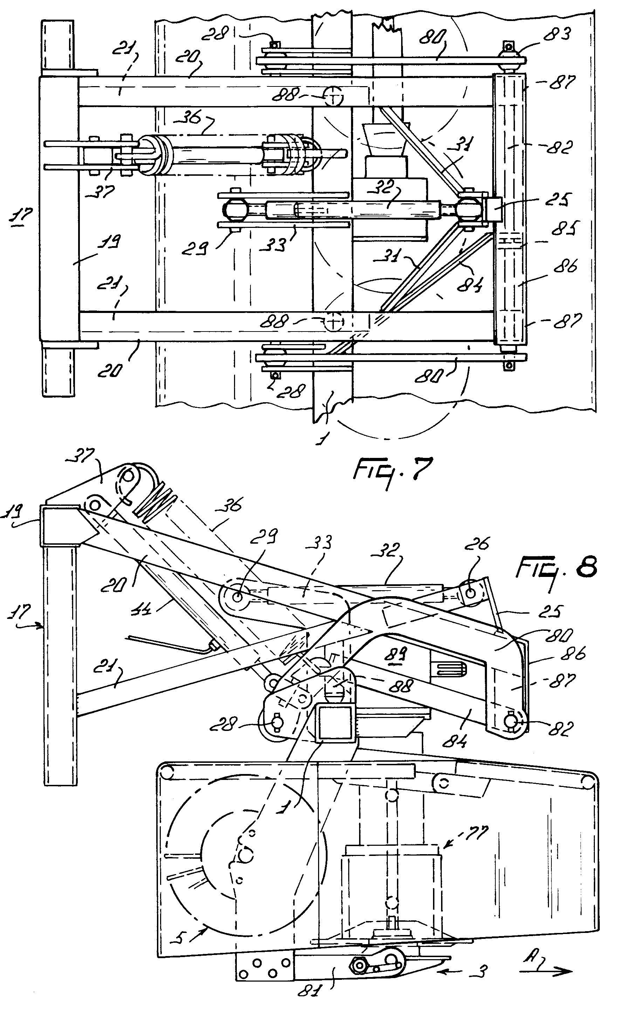

Another favourable embodiment according to the invention is presented in Figures 7 and 8. In this embodiment, the leading lower linkages of the four-bar linkage 89 comprises a joint pivot shaft or rod 82 which at its end closest to the transmissions of the machine is coupled to the relevant connecting arm 80 by means of a bolt joint 83. At its end remote from the transmission elements of the machine, the rod 82 is connected to the relevant arm 80 by directly passing its relevant end through a bore of the arm. The latter arm 80 in this embodiment is connected to said rod 82 through the presence of a strut 84 extending from the inner side of the arm 80 and approximately above a frame beam 1 towards almost halfway the length of the rod 82 where the strut 84 comprises a bore through which the rod 82 passes. The rod 82 is at this point supported by means of a lug 85 connected to a plate-shaped connecting member 86 connecting the leading ends of the supports 20. The lug 85 also comprises a bore through which the rod 82 is passed. As can be seen from both Figure 7 and 8, the upper connection points of the four-bar linkage are displaced somewhat to the rear relative to the lower connection points.

As can be seen from Figure 8, the supports 20 and the struts 21 are in the present embodiment mounted under an angle relative to the trestle 17 such that a support 20 intersects halfway the distance between the leading upper and lower linkages. At their leading ends, the supports 20 comprise a downwardly directed part 87, supporting the rod 82 at a low level. The machine further comprises distance members 88 extending from the first frame section 13, in particular from the struts 21 thereof, and above the frame beam 1 in downward direction. A distance member 88 comprises a rubber stop at its lower end for abutment against the frame beam 1 and limits the possible movement in upward direction of the second frame part 15 relative to the first frame part 13.

In operation, the embodiment according to Figures 7 and 8 realizes a balanced following by the second frame part 15 of the first frame part 13 and favourable upward deflection properties of the second frame part 15 relative to the first frame part 13 at encountering obstacles or unevennesses in the field. Sideways deflection or, otherwise denoted, lateral deflection of the second frame part 15 relative to the first frame part 13 is in this embodiment effectively dampened or counteracted through the presence of the strut 84.

The invention is not limited to the features described in the foregoing, but also relate to all the details shown in the drawings. The invention further relates to all kinds of alternatives in the construction, of course as far as they are within the wording of the following claims.

## Claims

1. A mowing machine intended for being coupled to a coupling device attached to the front side of a vehicle and having for its object to carry the machine, the machine comprising a first (13) and a second (15) frame portion, the first frame portion (13) comprising a coupling trestle (17) and a carrier structure (20, 22) connected thereto and the second frame portion (15) comprising a frame beam (1) which extends at least substantially at a square angle to the direction of travel (A) and in a predominantly horizontal direction, to which at least one carrier (3) disposed at a lower level is coupled for accommodating mowing members (4) which are rotatable via upwardly directed and motorically drivable shafts, characterized in that the first (13) and the second (15) frame portions are interconnected via a four-bar linkage (14) which is pivotal about shafts (26 - 29) which are arranged at least predominantly horizontally and transversely of the direction of travel (A).

2. A mowing machine as claimed in claim 1, characterized in that the carrier (3) and the major portion of the drive means (6, 8, 11, 66, 67) intended for driving the mowing elements (4) are, taken in a side view, located at least predominantly between the leading (27) and the trailing (28) pivotal shafts of the lower connecting arms (24) of the four-bar linkage (14).

3. A mowing machine as claimed in claim 1 or 2, characterized in that at least two (24) of a set of four-bar linkage arms (24, 32) are interconnected by a torsion rod (50) which comprises the pivotal shafts (27) for the connection between the relevant connecting arms (24) and the first frame portion (13), or is at least concentrically disposed thereabout.

4. A mowing machine as claimed in one or more of the preceding claims, characterized in that the carrier structure (20, 22) extends predominantly forwardly and reaches to beyond the second frame portion (15).

5. A mowing machine as claimed in one or more of the preceding claims, characterized in that the machine is provided at one end of the second frame portion (1) with a transmission box (8), which, via transmission means (66, 67) is in driving connection with drive means (68, 70) incorporated in the carrier (3) for the mowing elements (4).

6. A mowing machine as claimed in one or more of the preceding claims, characterized in that, taken in the lengthwise direction of the second frame portion (1), the machine includes, arranged in the centre, a transmission box (6) for the drive from a tractor or an other type of vehicle, the central transmission box (6) being in driving connection with the lateral transmission box (8) via a coupling shaft (11) which extends transversely to the direction of travel (A).

7. A mowing machine as claimed in one or more of the preceding claims, characterized in that the mowing elements (4) are drivable abut drive shafts which extend upwardly from the cutter bar (3) and, as is also the driving connection between the drive means (68, 70) in the carrier (3) and the transmission box (8) located near an end of the frame beam (1), and preferably also the central transmission box (6), are attached, taken in the direction of operative travel (A), to the leading side of the frame beam (1).

8. A mowing machine as claimed in one or more of the preceding claims, characterized in that the central transmission box (6), the transmission box (8) and the coupling shaft (11) extending therebetween are arranged in the machine predominantly at a higher level than the frame beam (1).

9. A mowing machine as claimed in one or more of the preceding claims, characterized in that the mowing machine includes a crusher implement (5) which is at least predominantly located behind the carrier (3) and extends in parallel therewith and is bearing-supported by arms (2) for the connection between the frame beam (1) and the carrier (3).

10. A mowing machine as claimed in any one of the preceding claims, characterized in that the lower pivotal shafts (27, 28) of the four-bar linkage (14) are located below the level of the coupling shaft (11) which extends transversely of the direction of operative travel and the lower connecting arms (24) of the four-bar linkage (14) is of such a design that it curves over the upper side of the coupling shaft (11).

11. A mowing machine as claimed in one or more of the preceding claims, characterized in that relative to the first frame portion (13) the frame beam (1) is further supported with the aid of a flexible supporting element (36) with is disposed parallel to a vertical plane in the direction of travel (A), beyond the midway point (M) of the frame beam (1) at that side along which the drive (8, 11, 66, 67, 68) for the mowing elements (4) extends.

12. A mowing machine as claimed in claim 11, characterized in that an operating element (44), more in particular a hydraulic readjusting cylinder is disposed parallel to and below the flexible supporting element (36) between the first (13) and the second (15) frame portions.

13. A mowing machine as claimed in claim 11 or 12, characterized in that the operating element (44) is attached to the second frame portion (15) via an intermediate member (45) whose motion is limited by stops (41) and near each of its ends is pivotal about a pivotal shaft (43, 46) which extends horizontally and transversely of the direction of travel (A).

14. A mowing machine as claimed in one or more of the preceding claims, characterized in that the four-bar linkage (14) includes two lower connecting arms and a connecting arm (32) arranged centrally therebetween, and, taken in a side view, is preferably in the shape of a parallelogram.

15. A mowing machine as claimed in one or more of the preceding claims, characterized in that the rear pivotal points (28) for the lower connecting arms (24) include a ball joint.

16. A mowing machine as claimed in one or more of the preceding claims, characterized in that both the leading (26) and the trailing (29) pivotal point of an upper connecting arm (32) comprises a ball joint.

17. A mowing machine as claimed in one or more of the preceding claims, characterized in that the lateral motion of the second frame portion (15) relative to the first frame portion (13) is limited with the aid of a torsion rod (50) which is rigidly connected to the leading end of the lower connecting arms (24) and which also constitutes the leading lower pivotal shaft (27) of the four-bar linkage (14).

18. A mowing machine as claimed in one or more of the preceding claims, characterized in that, taken in a side view, the supporting element (36) arranged between the first (13) and second (15) frame portions acts on the second frame portion (15) between the rotary shaft (59) of the crusher implement and the carrier (3).

19. A mowing machine as claimed in one or more of the preceding claims, characterized in that the drive of the mowing elements (4) includes a predominantly vertically extending drive shaft (66) which is shielded with the aid of a guard which consists of two drum-shaped elements (73, 74) which are movable independently of each other, one of which can be moved into or over the other.

20. A mowing machine as claimed in claim 19, characterized in that the upper guarding element has a bulk which is less than that of the lower guarding element (74) and is connected to a flange member (71) attached to the transmission box (8), whilst the lower guarding element (74) is connected to a mowing element (4) attached around the upwardly directed drive elements (68, 67, 66).

21. A mowing machine as claimed in claim 19 or 20, characterized in that the transmission between the transmission box (8) disposed in the upper part of the second frame portion (15) and the transmission means (68, 70) associated with the cutter bar (3) includes a telescopic coupling shaft (66) which for the connection to the said transmission means is connected thereto at both ends via a universal joint (67).
